# FASCICULE DE BREVET EUROPEEN

(11) **EP 2 841 296 B1**
(45) Date de publication et mention de la délivrance du brevet: **03.02.2016**
(21) Numéro de dépôt: 13719806.5
(22) Date de dépôt: 25.04.2013
(51) Int. Cl.: B60L 11/18, H01R 13/504, H02G 11/00, H01R 13/52

(54) **SYSTEME DE CONNEXION POUR LA CHARGE D'UN VEHICULE ELECTRIQUE**
ANSCHLUSSSYSTEM ZUM AUFLADEN EINES ELEKTRISCHEN FAHRZEUGS
CONNECTION SYSTEM FOR CHARGING AN ELECTRIC VEHICLE

(30) Priorité: 26.04.2012 FR 1253851
(43) Date de publication de la demande: 04.03.2015
(73) Titulaire: Conductix Wampfler France, 92230 Gennevilliers (FR)
(72) Inventeur: LACOUR, Gilles, F-01300 Belley (FR)
(74) Mandataire: Regimbeau
(86) Numéro de dépôt international: PCT/EP2013/058566
(87) Numéro de publication internationale: WO 2013/160386

(56) Documents cités:
- EP-A2- 0 630 074
- CH-A5- 688 598
- DE-A1-102009 016 895

## Description

### DOMAINE TECHNIQUE

La présente invention concerne le domaine technique des dispositifs permettant de charger/recharger des moyens de stockage d'énergie électrique d'un véhicule comprenant un moteur électrique.

### ETAT DE LA TECHNIQUE

On a déjà développé des dispositifs permettant de recharger les moyens de stockage d'énergie d'un véhicule à entraînement électrique.

Une approche consiste à équiper le véhicule d'un cordon d'alimentation comprenant à une extrémité libre un connecteur apte à coopérer avec un connecteur complémentaire relié à une source d'énergie électrique externe. En variante, le cordon d'alimentation est relié à la source électrique et se connecte sur un connecteur prévu sur le véhicule. Toutefois, ceci nécessite que l'utilisateur descende de son véhicule pour raccorder manuellement la source d'énergie électrique aux moyens de stockage à l'aide du cordon. Ceci est fastidieux et engendre un risque d'électrocution en cas de mauvaise manipulation.

Pour remédier à cet inconvénient, on connaît de US 6 265 261 un dispositif d'alimentation automatique destiné à un véhicule électrique. Ce dispositif d'alimentation peut être mis en oeuvre sur un rail disposé au sol relié à une source d'énergie électrique. Pour assurer un positionnement précis du véhicule par rapport au rail, le dispositif comprend, côté véhicule, un élément en forme de U inversé dont les parois latérales sont destinées à venir de part et d'autre du rail de sorte que l'élément en forme de U inversé coiffe le rail. Toutefois, un inconvénient de ce dispositif d'alimentation est qu'il requiert un positionnement précis du véhicule par rapport au rail pour permettre la mise en contact du rail et de l'élément en U inversé.

On connaît également de US 5 461 298 un dispositif d'alimentation utilisant des informations d'alignement du véhicule par rapport à la source d'énergie électrique pour permettre un amarrage précis du véhicule à cette source d'énergie. Là encore, le dispositif de charge nécessite un positionnement précis du véhicule par rapport à la source d'énergie électrique.

Pour palier ces inconvénients, US 5 523 666 propose un dispositif d'alimentation en énergie électrique comprenant un élément de contact côté véhicule destiné à venir en contact avec un élément complémentaire disposé côté source d'énergie électrique. Un émetteur côté véhicule permet la transmission à la source d'énergie de données concernant la position instantanée en hauteur de l'élément de contact du véhicule. Des moyens de déplacement permettent le réglage en hauteur de l'élément complémentaire côté source d'énergie en fonction de ces informations sur la hauteur de l'élément de contact. Ceci permet d'adapter automatiquement les hauteurs de l'élément de contact et de l'élément complémentaire. Toutefois, un inconvénient de ce dispositif d'alimentation est qu'il permet uniquement une tolérance en hauteur sur le positionnement du véhicule.

Pour s'affranchir des contraintes sur le positionnement du véhicule, US 5 431 264 propose un système d'alimentation en énergie électrique par induction. Toutefois, ce type de système d'alimentation par induction présente de nombreux inconvénients. Notamment, un champ électromagnétique puissant est généré pour permettre la recharge du véhicule. Or un tel champ électromagnétique peut nuire à l'intégrité physique des personnes situées à proximité du champ magnétique. CH688598 divulgue un système de couplage électrique d'un dispositif de charge à la batterie d'un véhicule électrique, ledit système comprenant une barre conductrice, un panneau de protection et un volet, aptes à être déplacés entre une position escamotée et une position dégagée.

Un but de la présente invention est de proposer un dispositif de couplage automatique de moyens de stockage d'énergie électrique permettant de pallier les inconvénients précités.

Un autre but de la présente invention est de proposer un dispositif de couplage sécurisé et plus robuste que les dispositifs de l'art antérieur:

### RESUME DE L'INVENTION

A cet effet on propose un système de couplage électrique d'un dispositif de charge électrique à des moyens de stockage d'énergie d'un véhicule automobile à entrainement électrique, le système comprenant :
- un support, par exemple encastrable, dans un renfoncement pratiqué dans le sol,
- au moins une barre électriquement conductrice, la barre étant apte à être connectée électriquement au dispositif de charge,
- au moins un panneau de protection du renfoncement dans lequel est logé le support enfichable et apte à dégager une ouverture supérieure du support,
- au moins un volet apte à faire saillie vers le haut à partir du support pour éviter la chute d'objets dans ladite ouverture supérieure,
- des moyens d'entrainement aptes à déplacer la barre, le panneau de protection et le volet :
   ∘ entre une position escamotée où :
      ▪ la barre et le volet sont positionnés dans le renfoncement, et où
      ▪ le panneau de protection couvre le renfoncement,
   ∘ et une position dégagée du sol où :
      ▪ la barre et le volet s'étendent au moins partiellement à l'extérieur du renfoncement, et où
      ▪ le panneau de protection fait saillie du sol,
- un dispositif de commande pour synchroniser les déplacements de la barre, du volet et du panneau de protection, le dispositif de commande étant prévu pour commander le déplacement relatif de la barre par rapport au panneau de protection lorsqu'une ouverture formée entre le volet et le panneau de protection est suffisante pour permettre le passage de ladite barre entre la position escamotée et la position dégagée du sol.

La présence d'un volet, d'un panneau et d'une plaque dont les déplacements sont synchronisés par un dispositif de commande permet de limiter les risques de chute d'objets (graviers, branches, détritus, etc.) dans le support. Cette solution peut être mise en place dans des environnements où la solution du câble aérien n'est pas adaptée, comme par exemple les espaces couverts. Elle permet également de recharger des véhicules ayant des hauteurs quelconques. Par ailleurs, la solution proposée permet une grande tolérance sur le positionnement du véhicule par rapport aux contacts électriques situés dans le sol.

Des aspects préférés mais non limitatifs du système selon l'invention sont les suivants :
- le dispositif de commande est prévu pour :
   o commander le déplacement du panneau de protection et du volet de sorte à maintenir le panneau de protection en contact avec le volet entre la position escamotée et une position intermédiaire,
   o commander le déplacement du panneau de protection et du volet de sorte à écarter le panneau de protection du volet entre la position intermédiaire et la position dégagée du sol, l'écartement entre le panneau de protection et le volet formant l'ouverture pour le passage de la barre ;
- le dispositif de commande est prévu pour :
   ∘ commander le déplacement du volet en rotation autour d'une première liaison pivot entre la position escamotée et la position intermédiaire, et
   o commander le déplacement du volet en rotation autour de la première liaison pivot et en rotation autour d'une deuxième liaison pivot entre la position intermédiaire et la position dégagée du sol ;
- les moyens d'entrainement comprennent un unique moteur électrique entrainant un arbre en rotation ;
- le panneau de protection est lié à pivotement au support enfichable par une charnière s'étendant le long d'un bord du renfoncement ;
- le panneau de protection comprend une paroi supérieure et deux parois latérales perpendiculaires à la paroi supérieure, les parois latérales s'étendant à l'intérieur du renfoncement dans la position escamotée et s'étendant au moins partiellement à l'extérieur du renfoncement dans la position dégagée du sol ;
- le dispositif de commande comprend une bielle coudée :
   ∘ liée à pivotement au panneau de protection par l'une de ses extrémités, et
   ∘ liée à pivotement aux moyens d'entraînement par l'autre de ses extrémités ;
- la bielle coudée est liée à pivotement aux moyens d'entraînement par l'intermédiaire d'un bras solidaire des moyens d'entraînement, le système comprenant en outre un élément de blocage dégageable pour :
   ∘ d'une part fixer le bras aux moyens d'entraînement, et
   ∘ d'autre part libérer le bras des moyens d'entraînement lorsqu'une force d'écrasement appliquée sur le panneau de protection dépasse une valeur seuil et que le panneau n'est pas dans la position escamotée ;
- l'élément de blocage dégageable est une goupille cisaillable ;
- le bras et la bielle coudée sont agencés de sorte que :
   ∘ dans la position escamotée, l'angle entre le bras (9) et la verticale est compris entre environ 0 et 20°, préférentiellement entre environ 0 et 10°, et
   ∘ dans la position dégagée, l'angle entre le bras (9) et l'horizontale est compris entre environ 0 et 20°, préférentiellement entre environ 0 et 10° ;
- le volet est lié à pivotement au panneau de protection, le dispositif de commande comprenant des moyens élastiques, tels qu'un ressort, pour appliquer une force sur le volet tendant à l'éloigner du panneau de protection ;
- le dispositif de commande comprend également deux bielles liées à pivotement à la barre et au panneau de protection ;
- le dispositif de commande comprend un limiteur de course pour réduire la distance parcourue par la barre entre la position escamotée et la position dégagée du sol ;
- le limiteur de course est agencé de sorte que la distance parcourue par la barre entre les positions escamotée et dégagée du sol est inférieure à la distance parcourue par le panneau de protection entre les positions escamotée et dégagée du sol ;
- le limiteur de course comprend une biellette centrale liée à pivotement à deux biellettes latérales par ses deux extrémités et liée à pivotement à une patte fixée au panneau de protection au niveau d'une liaison pivot localisée entre les extrémités de la biellette centrale, l'extrémité libre de l'une des biellettes latérales étant liée à pivotement à la barre, et l'extrémité libre de l'autre des biellettes latérales étant liée à pivotement au support enfichable ;
- la barre est montée sur une base comportant des moyens élastiques exerçant une force sur la barre tendant à écarter la barre de la base ;
- la base comprend en outre un capteur pour détecter la mise en contact de la barre avec un véhicule et pour commander l'arrêt des moyens d'entrainement lorsque ladite mise en contact est détectée ;
- le capteur comprend un contacteur de fin de course pour détecter une force exercée par la barre sur la base tendant à comprimer les moyens élastiques et pour commander l'arrêt des moyens d'entrainement lorsque ladite force est supérieure à un seuil.

L'invention concerne également une installation pour la recharge de véhicules à entraînement électrique, remarquable en ce qu'elle comprend une aire de stationnement de véhicule pourvue d'une pluralité de systèmes de couplage ayant les caractéristiques ci-dessus.

### BREVE DESCRIPTION DES FIGURES

D'autres caractéristiques, buts et avantages de la présente invention ressortiront encore de la description qui suit, laquelle est purement illustrative et non limitative et doit être lue au regard des dessins annexés sur lesquels :
- les figures 1 et 2 sont des vues de côté d'un système de couplage dans une position escamotée ;
- La figure 3 est une vue de côté du système de couplage dans une position intermédiaire ;
- La figure 4 illustre une de côté du système de couplage illustrant une bille coudée d'un dispositif de commande du système de couplage ;
- Les figures 5 et 6 sont des vues de côté du système de couplage dans une position dégagée du sol ;
- La figure 7 est une vue en transparence du système de couplage dans la position dégagée du sol ;
- La figure 8 est une vue pleine du système de couplage dans la position dégagée du sol ;
- La figure 9 illustre une courbe représentant la distance entre le volet et le sol, la distance relative entre la barre et le volet ainsi que la largeur d'une ouverture en fonction du temps.

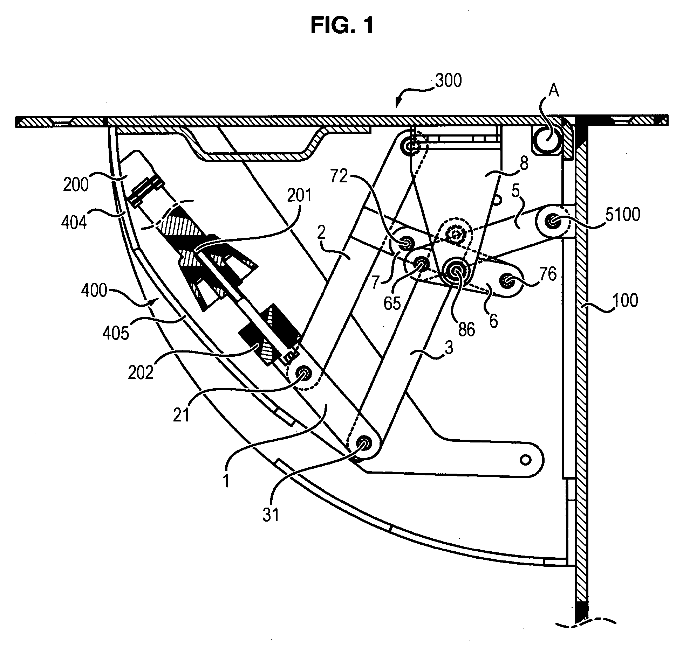

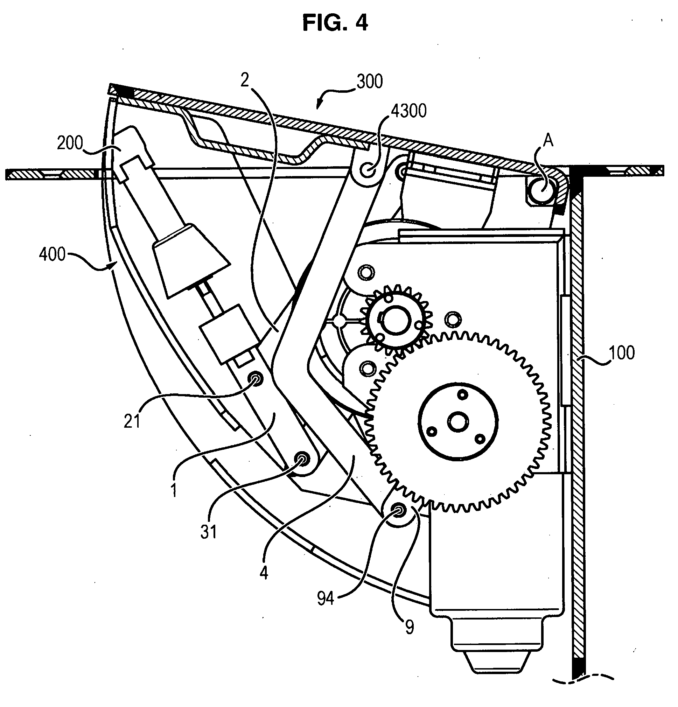

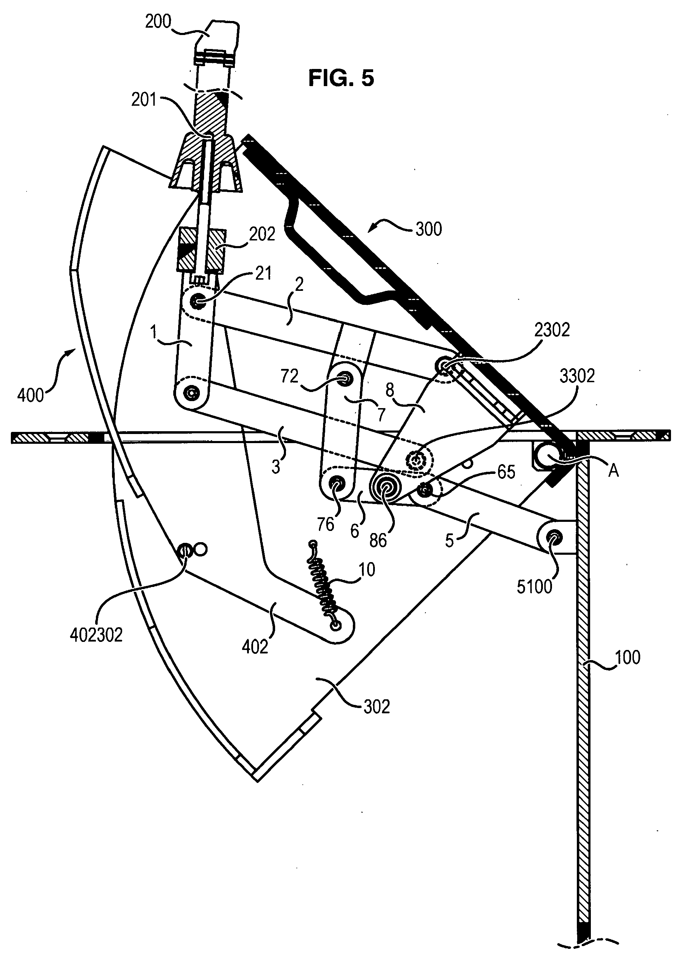

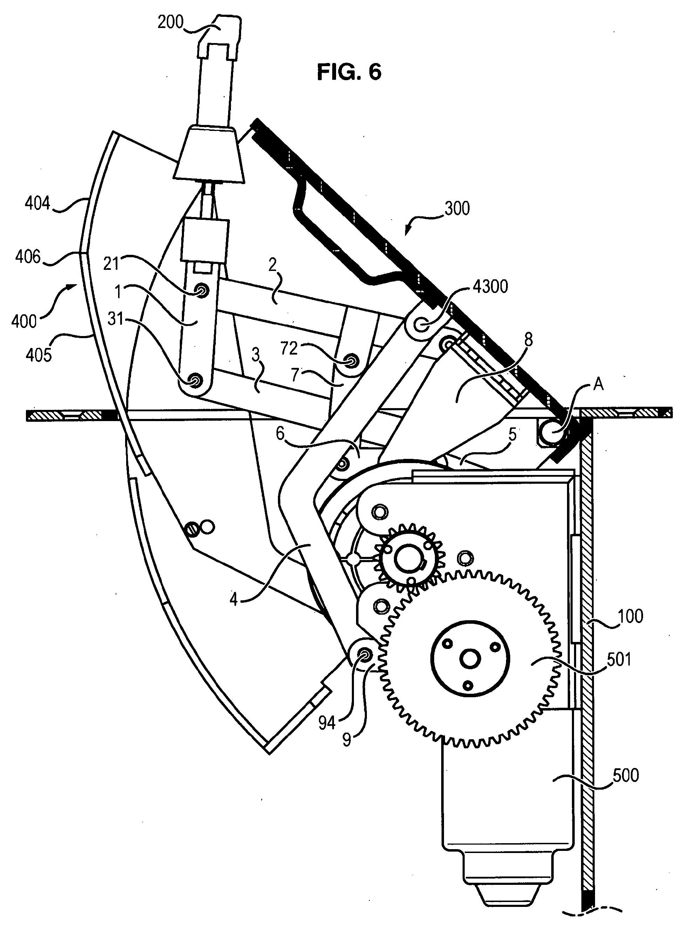

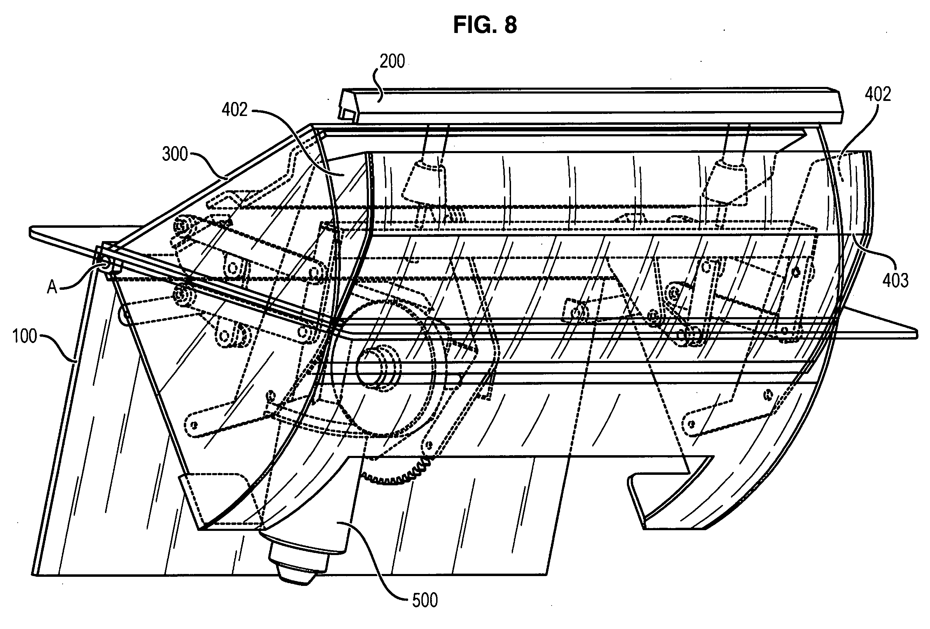

Les figures 1 à 8 sont des plans illustrant à l'échelle un mode de réalisation du système de couplage. L'homme du métier peut donc déduire de ces plans les dimensions, formes, positions et angles des différentes pièces le constituant ainsi que leurs interactions pour réaliser l'invention. Les différents éléments illustrés sur ces figures font donc parti de la description.

### DESCRIPTION DETAILLEE DE FORMES DE REALISATION PREFEREES DE L'INVENTION

On va maintenant décrire plus en détail l'invention en référence aux figures.

### Principe général de l'invention

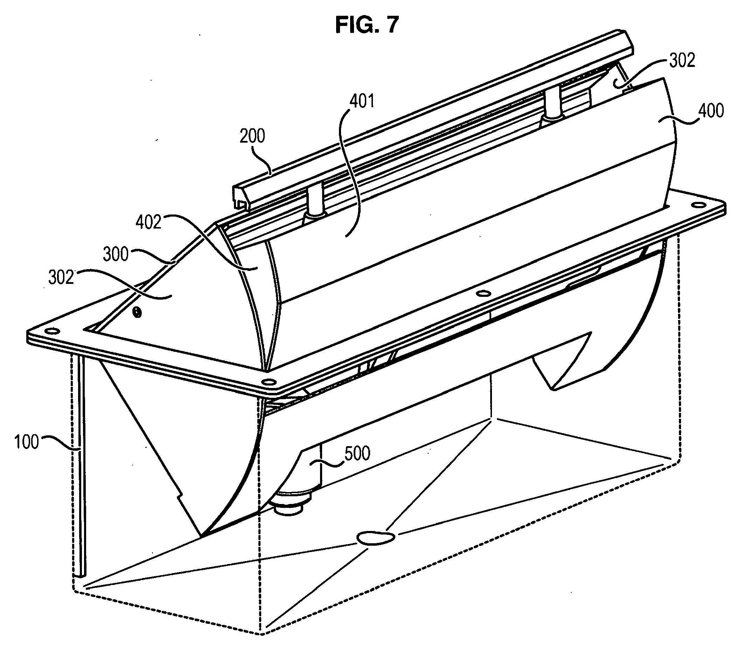

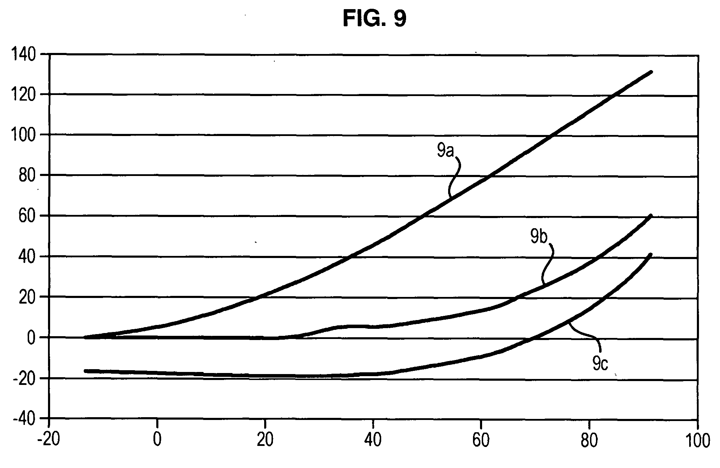

En référence aux figures 7 et 9, on a illustré un mode de réalisation d'un système de couplage électrique permettant de connecter électriquement un dispositif de charge électrique à des moyens de stockage d'énergie d'un véhicule automobile à entrainement électrique.

Ce système de couplage permet le chargement électrique d'un véhicule électrique par le dessous du véhicule.

Le système de couplage comprend les éléments principaux suivants : un support 100, une barre conductrice 200, un panneau 300 et un volet 400, des moyens d'entrainement 500 et un dispositif de commande.

### Support enfichable

Le support 100 est enfichable dans un renfoncement pratiqué dans le sol. Le support est par exemple rectangulaire et est composé de quatre cloisons et d'un fond destinés à recevoir les éléments constituant le système de couplage. Il est fixé au sol par une semelle s'étendant périphériquement vers l'extérieur dans sa région supérieure.

### Plaque électriquement conductrice

La barre 200 est électriquement conductrice. Cette barre 200 est connectée électriquement au dispositif de charge.

La barre 200 est destinée à venir en contact avec une autre barre électriquement conductrice disposée sous le véhicule et connectée aux ensembles de stockage d'énergie électrique à charger électriquement (typiquement des batteries).

La barre 200 est fixée sur une base 1 qui peut être composée de deux tiges s'étendant perpendiculairement à la barre du véhicule au niveau des extrémités de celle-ci.

### Panneau de protection

Le panneau 300 permet de protéger le renfoncement dans lequel est logé le support enfichable 100 lorsque le système de couplage est dans la position escamotée. Plus précisément, le panneau 300 permet de protéger les éléments du système de couplage logés dans le support 100 lorsqu'aucun véhicule n'est au-dessus de celui-ci.

Le panneau 300 comprend une paroi supérieure 301 destinée à coiffer le support enfichable.

Le panneau 300 comprend également deux parois latérales 302 s'étendant perpendiculairement à la paroi supérieure 301 sur des premier et deuxième bords opposés de celle-ci.

Le panneau de protection 300 est monté pivotant autour d'une charnière A fixée au support 100 et s'étendant le long d'un troisième bord de la paroi supérieure 301.

Ceci permet une ouverture du panneau au niveau du quatrième bord de la paroi supérieure 301.

### Volet

Le volet 400 permet d'éviter la chute d'objets dans le support enfichable.

Le volet 400 s'étend dans le support enfichable. Il comprend une paroi frontale 401 s'étendant dans le support 100 au niveau du quatrième bord de la paroi supérieure 300 du panneau de protection 301.

Dans la position escamotée, le bord supérieur de la paroi frontale 401 est en contact avec le quatrième bord de la paroi supérieur du panneau de protection 300.

L'ouverture permettant le passage de la barre 200 se forme entre ce bord supérieur et le quatrième bord lors du déplacement du panneau 300 et du volet 400 pour passer dé la position escamotée à la position dégagée du sol.

La paroi frontale 401 est composée de deux pans concaves 404, 405 de mêmes rayons de courbure. Ces pans 404, 405 sont reliés entre eux au niveau d'un faitage 406 concave de sorte que les centres des cercles osculateurs des deux pans concaves 404, 405 sont distants l'un de l'autre.

Le volet 400 comprend également deux parois de côté s'étendant de part et d'autre de la paroi frontale 401, parallèlement aux parois latérales 302 du panneau de protection 300.

Les parois de côté 402 du volet 400 sont montées pivotantes sur les parois latérales 302 du panneau de protection 300. Ceci permet un mouvement de rotation du volet 400 relativement au panneau 300 autour d'un axe 402302.

### Moyens d'entrainement

Les moyens d'entrainement 500 permettent le déplacement de la barre 200, du panneau de protection 300 et du volet 400 entre une position escamotée et une position dégagée du sol.

Dans la position escamotée, la barre 200 et le volet 400 sont positionnés dans le renfoncement, et le panneau de protection 300 couvre le renfoncement.

Dans la position dégagée du sol, la barre 200 et le volet 400 s'étendent au moins partiellement à l'extérieur du renfoncement, et le panneau de protection 300 fait saillie du sol.

Les moyens d'entrainement 500 comprennent par exemple trois vérins. Un premier vérin permet le déplacement de la barre 200. Un deuxième vérin permet le déplacement du panneau 300. Un troisième vérin permet le déplacement volet 400.

En variante, les moyens d'entrainement peuvent comprendre trois moteurs associés respectivement à la barre 200, au panneau 300 et au volet 400. L'utilisation de moteurs électriques permet l'obtention d'un couple sans-à-coup, contrairement aux vérins. Par ailleurs, l'utilisation de moteurs permet de développer une grande puissance pour un faible encombrement.

En variante encore, les moyens d'entrainement peuvent comprendre un moteur unique. L'utilisation d'un moteur unique permet de limiter l'encombrement du système de couplage.

### Dispositif de commande

Le dispositif de commande permet de synchroniser les déplacements de la barre 200, du panneau 300 et du volet 400 pour passer de la position escamotée à la position dégagée du sol.

Dans le cas d'un système de couplage comprenant trois vérins ou trois moteurs, le dispositif de commande peut être un microcontrôleur.

Dans le cas d'un système de couplage comprenant un moteur unique, le dispositif de commande peut comprendre une transmission mécanique comme décrite plus en détail dans la suite en référence aux figures 1 à 6.

Dans tous les cas, le dispositif de commande est prévu pour commander le déplacement relatif de la barre 200 par rapport au panneau de protection 300 dès qu'une ouverture entre le panneau de protection 300 et le volet 400 est suffisante pour permettre le passage de la barre 200.

Ceci permet d'optimiser la cinématique de déplacements de la barre, du panneau et du volet.

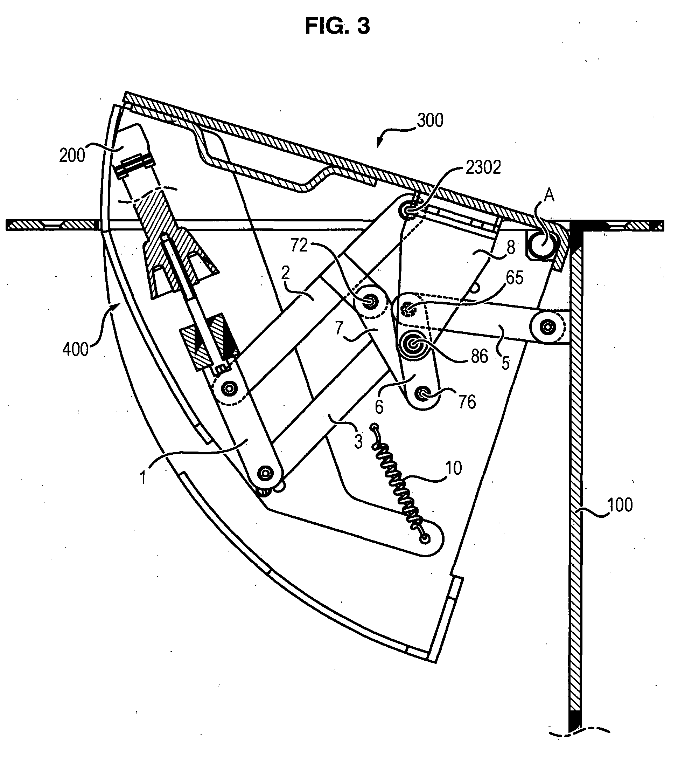

Dans un mode de réalisation, le dispositif de commande est prévu pour :
- commander le déplacement du panneau de protection 300 et du volet 400 de sorte à maintenir le panneau de protection 300 en contact avec le volet 400 entre la position escamotée et une position intermédiaire illustrée à la figure 3,
- commander le déplacement du panneau de protection 300 et du volet 400 de sorte à écarter le panneau de protection 300 du volet 400 entre la position intermédiaire et la position dégagée du sol.

Ainsi, l'ouverture entre le panneau de protection 300 et le volet 400 ne se forme que lorsque ceux-ci s'étendent suffisamment à l'extérieur du support 100. Ceci permet d'éviter la chute d'objet (gravier, détritus, etc.) à l'intérieur du support 100 lors du déploiement de la barre 200.

De préférence, le dispositif de commande est prévu pour :
- commander le déplacement du volet 400 en rotation entre la position escamotée et la position intermédiaire, et
- commander le déplacement du volet (400) en rotation et en translation entre la position intermédiaire et la position dégagée du sol.

Le principe général de fonctionnement du système de couplage va maintenant être décrit en référence à la figure 9 qui est une représentation graphique illustrant :
- la distance en fonction du temps entre le sol et le quatrième bord de la paroi supérieure du panneau de protection (courbe 9a),
- la distance relative entre la barre et le quatrième bord de la paroi supérieure du panneau de protection (courbe 9b),
- la distance (ou écartement) entre le bord supérieur de la paroi frontale du volet et le quatrième bord de la paroi supérieure du panneau de protection (courbe 9b).

On suppose que le système de couplage est dans la position escamotée au temps t=0. Le panneau de protection 300 recouvre le support enfichable 100 et les parois latérales du panneau sont à l'intérieur du support. La barre 200 et le volet 400 sont rétractés, c'est-à-dire qu'ils s'étendent à l'intérieur du support enfichable 100.

Les moyens d'entrainement 500 sont activés. La puissance produite par les moyens d'entrainement 500 est transmise à la barre 200, au panneau 300 et au volet 400.

La paroi supérieure 301 et les parois latérales 302 du panneau 300 pivotent autour de la charnière A de sorte que le quatrième bord s'éloigne du sol et que les parois latérales s'étendent partiellement à l'extérieur du support, prévenant ainsi les risques de chute d'objet au niveau des premier et deuxième bords du panneau de protection 300. A partir de la position intermédiaire, le volet se déplace en translation relativement au panneau 300. Le bord supérieur du volet 400 s'écarte du quatrième bord du panneau 300. Une ouverture se forme : la barre 200 se déplace relativement au quatrième bord pour venir en contact avec une barre électriquement conductrice disposée sous un véhicule.

Entre la position escamotée et la position intermédiaire, la distance entre le sol et le quatrième bord de la paroi supérieure augmente (courbe 9a) tandis que l'écartement entre le bord supérieur du volet et le quatrième bord du panneau reste nul (courbe 9b), et que la distance entre la barre et le panneau reste constante (courbe 9c).

Entre la position intermédiaire et la position dégagée, la distance entre le sol et le quatrième bord de la paroi supérieure augmente (courbe 9a), l'écartement entre le bord supérieur du volet 400 et le quatrième bord du panneau 300 augmente (courbe 9b), et la distance entre la barre 200 et le panneau 300 augmente (courbe 9c).

### Exemple de mode de réalisation

En référence aux figures 1 à 6, on a illustré un mode de réalisation du système de couplage dans lequel les moyens d'entrainement comprennent un moteur unique.

Dans ce mode de réalisation, le dispositif de commande remplit une double fonction. Il permet d'une part de synchroniser les déplacements de la barre 200, du panneau 300 et du volet 400, et d'autre part de transmettre la puissance produite par le moteur à la barre 200, au panneau 300 et au volet 400 pour permettre leur déplacement entre les positions escamotée et dégagée du sol.

Le dispositif de commande comprend une bielle coudée 4. La bielle coudée permet la transmission au panneau de la puissance générée par le moteur tout en minimisant l'encombrement du système. La bielle coudée 4 est liée à pivotement au panneau 300 par l'une de ses extrémités 4300. L'autre extrémité de la bielle coudée est montée pivotante sur le moteur au niveau d'une liaison pivot 94.

Plus précisément, la bielle coudée 4 est reliée aux moyens de transmission par l'intermédiaire d'un bras 9 solidaire des moyens de transmission, notamment d'un engrenage fixé sur l'arbre du moteur.

De préférence, le bras 9 est fixé au moteur en utilisant un élément de blocage dégageable 501 tel qu'une goupille cisaillable. Le fait que l'élément de blocage soit dégageable permet de libérer le bras 9 du moteur lorsqu'une force d'écrasement appliquée sur le panneau 300 dépasse une valeur seuil et que le panneau n'est pas dans la position escamotée.

Par exemple, si le panneau 300 est dans la position dégagée du sol et qu'un véhicule roule sur celui-ci, alors la force appliquée sur le panneau induit l'application d'une force équivalente sur la goupille. Sous l'effet de cette force, la goupille se cisaille, désolidarisant ainsi le dispositif de commande du moteur. Ceci induit une chute rapide de la barre 200, du panneau 300 et du volet 400 à l'intérieur du support 100 permettant d'éviter une dégradation du système.

Comme illustré aux figures 1 et 3, le bras 9 et la bielle coudée 4 peuvent être agencés de sorte que dans la position escamotée, l'angle entre le bras 9 et la verticale soit compris entre 0 et 20°, préférentiellement entre 0 et 10°. Ceci permet de limiter les risques de cisaillement de la goupille lorsque la barre, le panneau et le volet sont dans la position escamotée.

Le bras 9 et la bielle coudée 4 peuvent être agencés de sorte que dans la position dégagée du sol, l'angle entre le bras 9 et l'horizontale soit compris entre 0 et 20°, préférentiellement entre 0 et 10°. Ceci permet de faciliter le cisaillement de la goupille lorsque la barre, le panneau et le volet sont dans la position dégagée du sol.

Le dispositif de commande comprend également des moyens élastiques pour appliquer une force sur le volet 400 tendant à l'éloigner du panneau de protection 300. Ces moyens élastiques permettent d'induire un mouvement de rotation du volet relativement au panneau autour de l'axe de pivotement 402302.

Les moyens élastiques sont par exemple un ressort fixé :
- au volet par l'une de ses extrémités,
- au support par l'autre de ses extrémités.

Le dispositif de commande peut également comprendre deux bielles 2, 3. Ces bielles 2, 3 sont liées à pivotement à la base de la barre 200 au niveau de deux liaisons pivot 21, 31 et à l'une des parois latérale 302 du panneau 300 au niveau de deux liaisons pivot 2302, 3302.Les bielles 2, 3 permettent d'assurer un bon positionnement de la barre lors du déplacement de celle-ci dans la position dégagée.

Avantageusement, le dispositif de commande peut de plus comprendre un limiteur de course 5, 6, 7, 8. Le limiteur de course permet de réduire la distance parcourue par la barre entre la position escamotée et la position dégagée du sol. En limitant la distance parcourue par la barre, il est ainsi possible de réduire l'encombrement du système.

En effet, le limiteur de course est agencé de sorte que la distance parcourue par la barre entre les positions escamotée et dégagée du sol soit inférieure à la distance parcourue par le panneau de protection entre les positions escamotée et dégagée du sol. En réduisant l'amplitude du mouvement de la barre entre les positions extrêmes du système, il est possible de réduire le volume su support (et donc l'encombrement du système).

Dans le mode de réalisation illustré aux figures 1 à 6, le limiteur de course comprend une biellette centrale 6 et deux biellettes latérales 5, 7.

La biellette centrale est liée à pivotement à deux biellettes latérales 5, 7 par ses deux extrémités 65, 76. La biellette centrale 6 est également liée à pivotement et liée à pivotement à une patte 8 fixée au panneau de protection au niveau d'une liaison pivot 86 localisée entre les extrémités 65, 76 de la biellette centrale 6.

L'extrémité libre 72 de l'une des biellettes latérales 7 est liée à pivotement à la bielle 2 autour d'une liaison pivot 72. L'extrémité libre 5100 de l'autre des biellettes latérales 5 est liée à pivotement au support enfichable 100.

Des moyens élastiques 201, tel qu'un ressort, peuvent de plus être montés sur le dispositif entre la barre 200 et la base 1. Ces moyens élastiques 201 exercent une force sur la barre 200 tendant à l'écarter de la base 1. Ceci permet d'assurer un bon placage de la barre 200 sur la barre du véhicule électrique lorsque la barre est dans la position déployée.

Un capteur 202 peut être prévu au niveau de la base 1 du système de couplage. Ce capteur permet de détecter la mise en contact de la barre 200 avec la barre située sous le véhicule. Lorsque le capteur détecte la mise en contact de la barre 200 avec la barre du véhicule, celui-ci commande la désactivation du moteur afin d'éviter une détérioration du dispositif.

Le capteur 202 peut comprendre un contacteur de fin de course pour détecter une force exercée par la barre sur la base tendant à comprimer les moyens élastiques et pour commander l'arrêt des moyens d'entrainement lorsque ladite force est supérieure à un seuil.

### Principe de fonctionnement

Le principe de fonctionnement du système de couplage illustré aux figures 1 à 6 est le suivant.

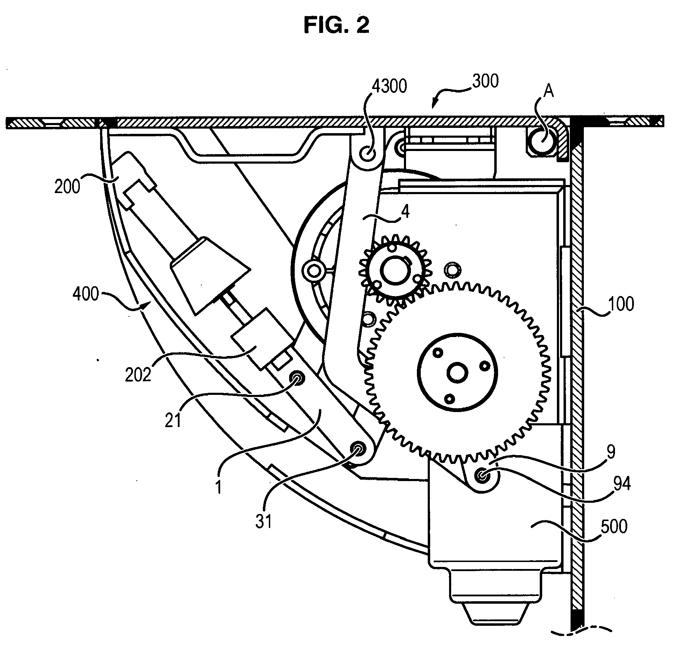

Dans la position escamotée (figure 1 et 2), la barre 200 et le volet 400 sont logés dans le support 100. Les biellettes 5, 6, 7 du limiteur de course sont sensiblement superposées de sorte que la distance entre les liaisons pivot 72 et 5100 étant minimale. Les bielles 2, 3 présentent un angle compris entre 0 et 30°. Le bras 9 reliant le moteur à la bielle coudée 4 est présente un angle compris entre 0 et -15°.

Lors de l'activation du moteur, le bras 9 pivote autour de l'arbre de transmission du moteur. La bielle coudée 4 se déplace, induisant ainsi le déplacement du panneau 300. Le volet lié à pivotement au panneau se déplace simultanément au panneau. Le premier pan 404 glisse le long de la paroi du support empêchant l'écartement du volet relativement au panneau. Sous l'effet de la traction exercée par la patte 8, la biellette centrale 6 pivote autour de la liaison 65 entre les biellettes 5 et 6. La barre 200 se déplace également simultanément au panneau, de sorte que la distance entre la barre et le panneau reste constante.

La barre, le panneau et le volet passe par la position intermédiaire (figure 3). Une fois que le sommet du volet 400 dépasse le sol, le volet 400 pivote relativement au panneau autour de la liaison pivot 402302, le ressort 10 exerçant une traction sur le ressort tendant à l'écarter du panneau. Le bord supérieur du volet 400 s'écarte du quatrième bord du panneau : une ouverture se forme pour le passage de la barre.

Une fois la biellette centrale 6 passée par la verticale, un déplacement de la biellette centrale 6 induit un déplacement de la barre, le déplacement de la barre étant de plus en plus important au fur et à mesure du dépliement des biellettes 5, 6 et 7.

Le tableau ci-dessous donne à titre indicatif les valeurs de :
- distance entre le sol et le quatrième bord du panneau,
- distance entre la barre et le quatrième bord du panneau,
- l'ouverture correspondant à l'écartement entre le bord supérieur du volet et le quatrième bord du panneau.
en fonction du déplacement angulaire de l'engrenage fixé à l'arbre de transmission du moteur.

| | | distance | |
|---|---|---|---|
| angle engrenage | panneau/sol | relative barre/panneau | ouverture |
| -13,27 | 0 | -16,52 | 0 |
| 1,19 | 5,88 | -17,4 | 0 |
| 12,16 | 13,81 | -18,2 | 0 |
| 14,64 | 16 | -18,35 | 0 |
| 18,31 | 19,5 | -18,54 | 0 |
| 23,19 | 24,61 | -18,68 | 0 |
| 28,83 | 31,16 | -18,62 | 2,5 |
| 33,93 | 37,65 | -18,29 | 5,45 |
| 38,56 | 43,94 | -17,69 | 5,77 |
| 43,93 | 51,73 | -16,53 | 6,45 |
| 59,96 | 77,4 | -8,82 | 13,66 |
| 67,14 | 89,73 | -2,56 | 20,63 |
| 73,67 | 101,16 | 5,1 | 28,34 |
| 82,07 | 115,9 | 18,52 | 40,93 |
| 88,74 | 127,4 | 33,65 | 54,27 |
| 91,29 | 131,71 | 41,67 | 60,58 |

On déduit de ce tableau que l'ouverture ne se forme que lorsque la distance entre le sol et le quatrième bord du panneau est supérieure à environ 24 centimètres dans le présent exemple. Ceci permet de limiter les risques de chute d'objets (détritus, gravier, etc.) dans le support lors du passage de la position escamotée à la position dégagée du sol.

On déduit également de ce tableau que la distance entre la barre et le panneau reste sensiblement constante entre les angles d'environ 13° (position escamotée) et d'environ 43°, dite deuxième position intermédiaire. A partir de la deuxième position intermédiaire, un faible déplacement angulaire de l'engrenage du moteur induit une augmentation importante de la distance entre la barre et le panneau.

De nombreuses modifications peuvent être apportées à la présente invention. Par exemple, le système de couplage peut comprendre une unité mécanique unique incorporant les deux barres conductrices (ou davantage) et un élément isolant séparant les barres de sorte à définir deux portion conductrices distinctes, chaque portion étant connectée électriquement à une borne d'une source d'alimentation électrique.

## Revendications

1. Système de couplage électrique d'un dispositif de charge électrique à des moyens de stockage d'énergie d'un véhicule automobile à entrainement électrique (20), le système comprenant :
- un support (100) dans un renfoncement pratiqué dans le sol,
- au moins une barre électriquement conductrice (200), la barre étant apte à être connectée électriquement au dispositif de charge,
- au moins un panneau de protection (300) du renfoncement dans lequel est logé le support enfichable et apte à dégager une ouverture supérieure du support,
- au moins un volet (400),
- des moyens d'entrainement (500) aptes à déplacer la barre, le panneau de protection et le volet :
∘ entre une position escamotée où :
▪ la barre est positionnée dans le renfoncement, et où
▪ le panneau de protection couvre le renfoncement,
∘ et une position dégagée du sol où :
▪ la barre et le volet s'étendent au moins partiellement à l'extérieur du renfoncement, et où
▪ le panneau de protection fait saillie du sol,
- un dispositif de commande (2, 3, 4, 5, 6, 7, 8, 10) pour synchroniser les déplacements de la barre, du volet et du panneau de protection, le dispositif de commande étant prévu pour commander le déplacement relatif de la barre par rapport au panneau de protection lorsqu'une ouverture formée entre le volet et le panneau de protection est suffisante pour permettre le passage de ladite barre entre la position escamotée et la position dégagée du sol **caractérisé en ce que** ledit volet est apte à faire saillie vers le haut à partir du support pour éviter la chute d'objets dans ladite ouverture supérieure, et que ledit volet est positionné dans le renforcement à la position escamotée.

2. Système selon la revendication 1, dans lequel le dispositif de commande est prévu pour :
- commander le déplacement du panneau de protection (300) et du volet (400) de sorte à maintenir le panneau de protection en contact avec le volet entre la position escamotée et une position intermédiaire,
- commander le déplacement du panneau de protection (300) et du volet (400) de sorte à écarter le panneau de protection du volet entre la position intermédiaire et la position dégagée du sol, l'écartement entre le panneau de protection et le volet formant l'ouverture pour le passage de la barre (200).

3. Système selon la revendication 2, dans lequel le dispositif de commande est prévu pour :
- commander le déplacement du volet (400) en rotation autour d'une première liaison pivot (A) entre la position escamotée et la position intermédiaire, et
- commander le déplacement du volet (400) en rotation autour de la première liaison pivot (A) et en rotation autour d'une deuxième liaison pivot (402302) entre la position intermédiaire et la position dégagée du sol.

4. Système selon l'une quelconque des revendications 1 à 3, dans lequel les moyens d'entrainement (500) comprennent un unique moteur électrique entrainant un arbre en rotation.

5. Système selon l'une quelconque des revendications précédentes, dans lequel le panneau de protection (300) est lié à pivotement au support enfichable par une charnière (A) s'étendant le long d'un bord du renfoncement.

6. Système selon l'une quelconque des revendications précédentes, dans lequel le panneau de protection (300) comprend une paroi supérieure (301) et deux parois latérales (302) perpendiculaires à la paroi supérieure, les parois latérales s'étendant à l'intérieur du renfoncement dans la position escamotée et s'étendant au moins partiellement à l'extérieur du renfoncement dans la position dégagée du sol.

7. Système selon l'une quelconque des revendications précédentes, dans lequel le dispositif de commande comprend une bielle coudée (4) :
- liée à pivotement au panneau de protection par l'une de ses extrémités (4300), et
- liée à pivotement aux moyens d'entraînement (500) par l'autre de ses extrémités (94).

8. Système selon la revendication précédente, dans lequel la bielle coudée est liée à pivotement aux moyens d'entraînement par l'intermédiaire d'un bras (9) solidaire des moyens d'entraînement, le système comprenant en outre un élément de blocage dégageable (501) pour :
- d'une part fixer le bras aux moyens d'entraînement, et
- d'autre part libérer le bras des moyens d'entraînement lorsqu'une force d'écrasement appliquée sur le panneau de protection dépasse une valeur seuil et que le panneau n'est pas dans la position escamotée.

9. Système selon la revendication 8, dans lequel l'élément de blocage dégageable (501) est une goupille cisaillable.

10. Système selon l'une des revendications 8 et 9, dans lequel le bras (9) et la bielle coudée (4) sont agencés de sorte que :
- dans la position escamotée, l'angle entre le bras (9) et la verticale est compris entre environ 0 et 20°, préférentiellement entre environ 0 et 10°, et
- dans la position dégagée, l'angle entre le bras (9) et l'horizontale est compris entre environ 0 et 20°, préférentiellement entre environ 0 et 10°.

11. Système selon l'une quelconque des revendications précédentes, dans lequel le volet (400) est lié à pivotement (402302) au panneau de protection (300), le dispositif de commande comprenant des moyens élastiques (10), tels qu'un ressort, pour appliquer une force sur le volet (400) tendant à l'éloigner du panneau de protection (300).

12. Système selon l'une des revendications précédentes, dans lequel le dispositif de commande comprend également deux bielles (2, 3) liées à pivotement à la barre (200) et au panneau de protection (300).

13. Système selon l'une quelconque des revendications précédentes, dans lequel le dispositif de commande comprend un limiteur de course (5, 6, 7, 8) pour réduire la distance parcourue par la barre entre la position escamotée et la position dégagée du sol.

14. Système selon la revendication 13, dans lequel le limiteur de course est agencé de sorte que la distance parcourue par la barre entre les positions escamotée et dégagée du sol est inférieure à la distance parcourue par le panneau de protection entre les positions escamotée et dégagée du sol.

15. Système selon l'une quelconque des revendications 13 et 14, dans lequel le limiteur de course comprend une biellette centrale (6) liée à pivotement à deux biellettes latérales (5, 7) par ses deux extrémités et liée à pivotement à une patte (8) fixée au panneau de protection au niveau d'une liaison pivot (86) localisée entre les extrémités (65, 76) de la biellette centrale (6), l'extrémité libre (72) de l'une des biellettes latérales (7) étant liée à pivotement à la barre (200), et l'extrémité libre (5100) de l'autre des biellettes latérales (5) étant liée à pivotement au support enfichable (100).

16. Système selon l'une quelconque des revendications précédentes, dans lequel la barre (200) est montée sur une base (1) comportant des moyens élastiques (201) exerçant une force sur la barre tendant à écarter la barre (200) de la base (1).

17. Système selon la revendication 16, dans lequel la base (1) comprend en outre un capteur (202) pour détecter la mise en contact de la barre (200) avec un véhicule et pour commander l'arrêt des moyens d'entrainement (500) lorsque ladite mise en contact est détectée.

18. Système selon la revendication 17, dans lequel le capteur (202) comprend un contacteur de fin de course pour détecter une force exercée par la barre sur la base tendant à comprimer les moyens élastiques et pour commander l'arrêt des moyens d'entrainement lorsque ladite force est supérieure à un seuil.

19. Installation pour la recharge de véhicules à entraînement électrique, **caractérisée en ce qu'**elle comprend une aire de stationnement de véhicule pourvue d'une pluralité de systèmes de couplage selon l'une des revendications 1 à 18.

## Patentansprüche

1. Elektrisches Verbindungssystem einer elektrischen Ladevorrichtung mit Energiespeichermitteln eines Kraftfahrzeugs mit Elektroantrieb (20), wobei das System umfasst:
- eine Stütze (100) in einem in den Boden eingearbeiteten Rücksprung,
- mindestens eine elektrisch leitende Stange (200), wobei die Stange imstande ist, mit der Ladevorrichtung elektrisch verbunden zu sein,
- mindestens eine Schutzplatte (300) des Rücksprungs, in dem die versenkbare Stütze untergebracht ist und die imstande ist, eine Öffnung über der Stütze freizugeben,
- mindestens eine Klappe (400),
- Antriebsmittel (500), die imstande sind, die Stange, die Schutzplatte und die Klappe zu verlagern:
o zwischen einer eingeklappten Position, wobei:
▪ die Stange im Rücksprung positioniert ist, und wobei
▪ die Schutzplatte den Rücksprung bedeckt,
∘ und einer von Boden gelösten Position, wobei:
▪ sich die Stange und die Klappe mindestens zum Teil außerhalb des Rücksprungs erstrecken, und wobei
▪ die Schutzplatte aus dem Boden herausragt,
- eine Steuervorrichtung (2, 3, 4, 5, 6, 7, 8, 10), um die Verlagerungen der Stange, der Klappe und der Schutzplatte zu synchronisieren, wobei die Steuervorrichtung vorgesehen ist, um die relative Verlagerung der Stange im Verhältnis zur Schutzplatte zu steuern, wenn eine zwischen der Klappe und der Schutzplatte gebildete Öffnung ausreichend ist, um den Übergang der Stange zwischen der eingeklappten Position und der vom Boden gelösten Position zu erlauben, **dadurch gekennzeichnet, dass** die Klappe imstande ist, ab der Stütze nach oben herauszuragen, um das Fallen von Gegenständen in die obere Öffnung zu verhindern, und dass die Klappe in der eingeklappten Position in dem Rücksprung positioniert ist.

2. System nach Anspruch 1, wobei die Steuervorrichtung vorgesehen ist, um:
- die Verlagerung der Schutzplatte (300) und der Klappe (400) derart zu steuern, dass die Schutzplatte zwischen der eingeklappten Position und einer Übergangsposition im Kontakt mit der Klappe gehalten wird,
- die Verlagerung der Schutzplatte (300) und der Klappe (400) derart zu steuern, das die Schutzplatte zwischen der Übergangsposition und der vom Boden gelösten Position von der Klappe beabstandet wird, wobei die Beabstandung zwischen der Schutzplatte und der Klappe die Öffnung für den Durchgang der Stange (200) bildet.

3. System nach Anspruch 2, wobei die Steuervorrichtung vorgesehen ist, um:
- die rotierende Verlagerung der Klappe (400) um eine erste Drehgelenkverbindung (A) zwischen der eingeklappten Position und der Übergangsposition zu steuern, und
- die rotierende Verlagerung der Klappe (400) um die erste Drehgelenkverbindung (A) und um eine zweite Drehgelenkverbindung (402302) zwischen der Übergangsposition und der vom Boden gelösten Position zu steuern.

4. System nach einem der Ansprüche 1 bis 3, wobei die Antriebsmittel (500) einen einzigen Elektromotor umfassen, der eine Welle rotierend antreibt.

5. System nach einem der vorangehenden Ansprüche, wobei die Schutzplatte (300) mit der versenkbaren Stütze mit einem Scharnier (A) schwenkbar verbunden ist, das sich entlang eines Randes des Rücksprungs erstreckt.

6. System nach einem der vorangehenden Ansprüche, wobei die Schutzplatte (300) eine obere Wand (301) und zwei zur oberen Wand senkrechte Seitenwände (302) umfasst, wobei sich die Seitenwände in der eingeklappten Position im Innern des Rücksprung erstrecken und sich in der vom Boden gelösten Position mindestens zum Teil außerhalb des Rücksprungs erstrecken.

7. System nach einem der vorangehenden Ansprüche, wobei die Steuervorrichtung eine gekrümmte Pleuelstange (4) umfasst:
- die mit einem ihrer Enden (4300) schwenkend mit der Schutzplatte verbunden ist, und
- die mit dem anderen ihrer Enden (94) schwenkend mit den Antriebsmitteln (500) verbunden ist.

8. System nach vorangehendem Anspruch, wobei die gekrümmte Pleuelstange mit einem Arm (9), der mit den Antriebsmitteln fest verbunden ist, schwenkend mit den Antriebsmitteln verbunden ist, wobei das System ferner ein lösbares Blockierelement (501) umfasst, um:
- zum einen den Arm an den Antriebsmitteln zu befestigen, und,
- zum anderen den Arm von den Antriebsmitteln zu lösen, wenn eine auf die Schutzplatte angewendete Druckkraft einen Grenzwert überschreitet und die Platte nicht in der eingeklappten Position ist.

9. System nach Anspruch 8, wobei das lösbare Blockierelement (501) ein scherbarer Stift ist.

10. System nach einem der Ansprüche 8 und 9, wobei der Arm (9) und die gekrümmte Pleuelstange (4) derart ausgebildet sind, dass:
- in der eingeklappten Position der Winkel zwischen dem Arm (9) und der Vertikalen zwischen zirka 0 und 20°, vorzugsweise zwischen zirka 0 und 10°, inklusive ist, und
- in der gelösten Position der Winkel zwischen dem Arm (9) und der Horizontalen zwischen zirka 0 und 20°, vorzugsweise zwischen zirka 0 und 10°, inklusive ist.

11. System nach einem der vorangehenden Ansprüche, wobei die Klappe (400) mit der Schutzplatte (300) schwenkbar (402302) verbunden ist, wobei die Steuervorrichtung elastische Mittel (10) wie eine Feder umfasst, um eine Kraft auf die Klappe (400) auszuüben, die dazu dient, die Schutzplatte (300) zu beabstanden.

12. System nach einem der vorangehenden Ansprüche, wobei die Steuervorrichtung ebenfalls zwei Pleuelstangen (2, 3) umfasst, die schwenkbar mit der Stange (200) und der Schutzplatte (300) verbunden sind.

13. System nach einem der vorangehenden Ansprüche, wobei die Steuervorrichtung einen Wegbegrenzer (5, 6, 7, 8) umfasst, um die von der Stange zwischen der eingeklappten Position und der vom Boden gelösten Position durchlaufene Distanz zu reduzieren.

14. System nach Anspruch 13, wobei der Wegbegrenzer derart ausgebildet ist, dass die von der Stange zwischen der eingeklappten und vom Boden gelösten Position durchlaufene Distanz kleiner als die von der Schutzplatte zwischen der eingeklappten und der vom Boden gelösten Position durchlaufene Distanz ist.

15. System nach einem der Ansprüche 13 und 14, wobei der Wegbegrenzer eine zentrale Pleuelstange (6) umfasst, die an ihren zwei Enden schwenkend mit zwei seitlichen Pleuelstangen (5, 7) verbunden ist und die mit einer an der Schutzplatte im Bereich einer Drehgelenkverbindung (86), die sich zwischen den Enden (65, 76) der zentralen Pleuelstange (6) befindet, befestigten Lasche (8) schwenkend verbunden ist, wobei das freie Ende (72) einer der seitlichen Pleuelstangen (7) mit der Stange (200) schwenkend verbunden ist und das freie Ende (5100) der anderen der seitlichen Pleuelstangen (5) mit der versenkbaren Stütze (100) schwenkend verbunden ist.

16. System nach einem der vorangehenden Ansprüche, wobei die Stange (200) auf einer Basis (1) montiert ist, die elastische Mittel (201) aufweist, die eine Kraft auf die Stange ausüben, die die Stange (200) von der Basis (1) beabstandet.

17. System nach Anspruch 16, wobei die Basis (1) ferner einen Sensor (202) umfasst, um das Inkontaktversetzen der Stange (200) mit einem Fahrzeug festzustellen und um den Stopp der Antriebsmittel (500) zu befehlen, wenn die Inkontaktversetzung festgestellt wurde.

18. System nach Anspruch 17, wobei der Sensor (202) einen Endlagenschalter umfasst, um eine von der Stange auf die Basis ausgeübte Kraft festzustellen, die die elastischen Mittel komprimiert und um den Stopp der Antriebsmittel zu befehlen, wenn die Kraft einen Grenzwert überschreitet.

19. Anlage zum Aufladen von Fahrzeugen mit Elektroantrieb, **dadurch gekennzeichnet, dass** sie einen Fahrzeugparkplatz umfasst, der mit einer Vielzahl von Verbindungssystemen nach einem der Ansprüche 1 bis 18 ausgestattet ist.

## Claims

1. System for electrically coupling an electrical charging device to electrical energy storage means of an electrically driven motor vehicle (20), the system including:
- a support (100) embeddable in a recess made in the ground,
- at least one electrically conductive bar (200), the bar being capable of being electrically connected to the charging device,
- at least one panel (300) for protecting the recess wherein the embeddable support is housed and capable of clearing an upper opening of the support,
- at least one flap (400),
- drive means (500) capable of moving the bar, the protective panel and the flap:
o between a retracted position where:
▪ the bar is positioned inside the recess, and where
▪ the protective panel covers the recess,
∘ and a clearance position where:
▪ the bar and the flap extend at least partially outside the recess and where
▪ the protective panel protrudes from the ground,
- a control device (2, 3, 4, 5, 6, 7, 8, 10) to synchronize the movements of the bar, the flap and the protective panel, the control device being designed to control the relative movement of the bar with respect to the protective panel when an opening formed between the flap and the protective panel is sufficient to allow passage of said bar between the retracted position and the clearance position, **characterized in that** said flap is capable of extending upward from the support to prevent objects from falling into said upper opening, and that said flap is positioned inside the recess in the retracted position.

2. The system according to Claim 1, wherein the control device is designed to:
- control the movement of the protective panel (300) and of the flap (400) so as to hold the protective panel in contact with the flap between the retracted position and an intermediate position,
- control the movement of the protective panel (300) and of the flap (400) so as to separate the protective panel from the flap between the intermediate position and the clearance position, the separation between the protective panel and the flap forming the opening for passage of the bar (200).

3. The system according to Claim 2, wherein the control device is designed to:
- control the movement of the flap (400) in rotation about a first pivot connection (A) between the retracted position and the intermediate position, and
- control the movement of the flap (400) in rotation about the first pivot connection (A) and in rotation about a second pivot connection (402302) between an intermediate position and the clearance position.

4. The system according to any one of Claims 1 to 3, wherein the drive means (500) include a single electric motor driving a shaft in rotation.

5. The system according to any one of the previous claims, wherein the protective panel (300) is connected pivotally to the embeddable support by a hinge (A) extending along one edge of the recess.

6. The system according to any one of the previous claims, wherein the protective panel (300) includes an upper wall (301) and two side walls (302) perpendicular to the upper wall, the side walls extending inside the recess in the retracted position and extending at least partially outside the recess in the clearance position.

7. The system according to any one of the previous claims, wherein the control device includes a bent connecting rod (4):
- pivotally connected to the protective panel at one of its ends (4300), and
- pivotally connected to the drive means (500) at its other end (94).

8. The system according to the previous claim, wherein the bent connecting rod is pivotally connected to the drive means through an arm (9) fastened to the drive means, the system also including a releasable locking element (501) to:
- on the one hand, fasten the arm to the drive means, and
- on the other hand, release the arm from the drive means when a crushing force applied to the protective panel exceeds a threshold value and the panel is not in the retracted position.

9. The system according to Claim 8, wherein the releasable locking element (501) is a shear pin.

10. The system according to one of Claims 8 and 9, wherein the arm (9) and the bent connecting rod (4) are arranged so that:
- in the retracted position, the angle between the arm (9) and the vertical is comprised between about 0 and 20°, preferably between about 0 and 10°, and
- in the clearance position, the angle between the arm (9) and the horizontal is comprised between about 0 and 20°, preferably between about 0 and 10°.

11. The system according to any one of the previous claims, wherein the flap (400) is pivotally connected (402302) to the protective panel (300), the control device including elastic means (10) such as a spring, for applying a force to the flap (400) tending to separate it from the protective panel (300).

12. The system according to one of the previous claims, wherein the control device also has two connecting rods (2, 3) pivotally connected to the bar (200) and to the protective panel (300).

13. The system according to any one of the previous claims, wherein the control device includes a stroke limiter (5, 6, 7, 8) to reduce the distance traveled by the bar between the retracted position and the clearance position.

14. The system according to Claim 13, wherein the stroke limiter is arranged so that the distance traveled by the bar between the retracted position and the clearance position is less than the distance traveled by the protective panel between the retracted position and the clearance position.

15. The system according to any one of Claims 13 and 14, wherein the stroke limiter includes a central connecting rod (6) pivotally connected to two lateral connecting rods (5, 7) at its two ends and pivotally connected to a tab (8) fastened to the protective panel at a pivot connection (86) located between the ends (65, 76) of the central connecting rod (6), the free end (72) of one of the lateral connecting rods (7) being pivotally connected to the bar (200) and the free end (5100) of the other lateral connecting rod (5) being pivotally connected to the embeddable support (100).

16. The system according to any one of the previous claims, wherein the bar (200) is mounted on a base (1) comprising elastic means (201) exerting a force on the bar tending to separate the bar (200) from the base (1).

17. The system according to Claim 16, wherein the base (1) further includes a sensor (202) for detecting the bar (200) coming into contact with a vehicle and to control stopping of the drive means (500) when said coming into contact is detected.

18. The system according to Claim 17, wherein the sensor (202) includes an end-of-stroke detector for detecting a force exerted by the bar on the base tending to compress the elastic means and for controlling the stopping of the drive means when said force exceeds a threshold.

19. An installation for recharging electrically driven vehicles, **characterized in that** it includes a vehicle parking area provided with a plurality of coupling systems according to one of Claims 1 to 18.
